# EUROPÄISCHE PATENTSCHRIFT

(11) **EP 1 042 093 B1**
(45) Veröffentlichungstag und Bekanntmachung des Hinweises auf die Patenterteilung: **08.03.2006**
(21) Anmeldenummer: 98965258.1
(22) Anmeldetag: 14.12.1998
(51) Int. Cl.: B22F 9/08

(54) **VERFAHREN UND VORRICHTUNG ZUR HERSTELLUNG FEINER PULVER DURCH ZERSTÄUBUNG VON SCHMELZEN MIT GASEN**
METHOD AND DEVICE FOR PRODUCING FINE POWDER BY ATOMIZING MOLTEN MATERIALS WITH GASES
PROCEDE ET DISPOSITIF POUR PRODUIRE DES POUDRES FINES PAR ATOMISATION DE MATIERES FONDUES AVEC DES GAZ

(30) Priorität: 17.12.1997 DE 19758111
(43) Veröffentlichungstag der Anmeldung: 11.10.2000
(73) Patentinhaber: NANOVAL Gesellschaft für Pulver- und Fasertechnik mbH & Co. KG, 13509 Berlin (DE)
(72) Erfinder: Schultz, Gunther, 12205 Berlin (DE)
(74) Vertreter: Pfenning, Meinig & Partner GbR
(86) Internationale Anmeldenummer: PCT/EP1998/008180
(87) Internationale Veröffentlichungsnummer: WO 1999/030858

(56) Entgegenhaltungen:
- EP-A- 0 444 767

## Beschreibung

Die vorliegende Erfindung betrifft ein Verfahren und eine Düse zur Herstellung feiner Pulver mit vorzugsweise sphärischem Habitus durch Zerstäubung von Schmelzen mit Gasen.

Zur Herstellung von Metallpulvern sind Gasverdüsungstechniken industriell weit verbreitet. Dabei werden unterschiedlichste Düsenkonstruktionen eingesetzt, denen allen gemeinsam ist, dass ein unter Druck stehendes Verdüsungsgas aus einer bzw. aus mehreren Gasdüsen entweicht und sich als turbulenter Strahl unter einem Winkel einer aus einer Schmelzedüse auslaufenden Schmelze nähert und diese zerstäubt. Eine Übersicht unterschiedlicher Düsenkonstruktionen ist beispielsweise A. J. Yule und J. J. Dunkley, "Atomization of Melts", Oxford, 1994, Seite 165 bis 189, zu entnehmen. Auf dem Weg zur Schmelze verliert das Gas einen großen Teil seiner Energie. Bei Verdüsungsgasdrücken bis etwa 35 bar werden als Ergebnis relativ grobe Metallpulver mit mittleren Korndurchmessern d₅₀ im Verdüsungszustand um etwa 50 µm und größer erhalten. Die so hergestellten Pulver haben zumeist eine breite Korngrößenverteilung, weil der Zerstäubungsimpuls durch die Turbulenzen starken Schwankungen unterliegt. Aus J. Ting et al., "A novel high pressure gas atomizing nozzel for liquid metal atomization", Adv. Powder Metallurgy and Particulate Materials, 1996, Seite 97 bis 108, sind spezielle Hochdruckdüsen mit Betriebsdrücken von bis zu 100 bar bekannt, die bei sehr hohem Gasverbrauch mittlere Korngrößen von etwa 20 µm erzeugen können. Alle bekannten Verfahren mit turbulenter Gasströmung sind zur direkten Herstellung von feinen Pulvern mit mittleren Korndurchmessern d₅₀ um etwa 10 µm nicht geeignet.

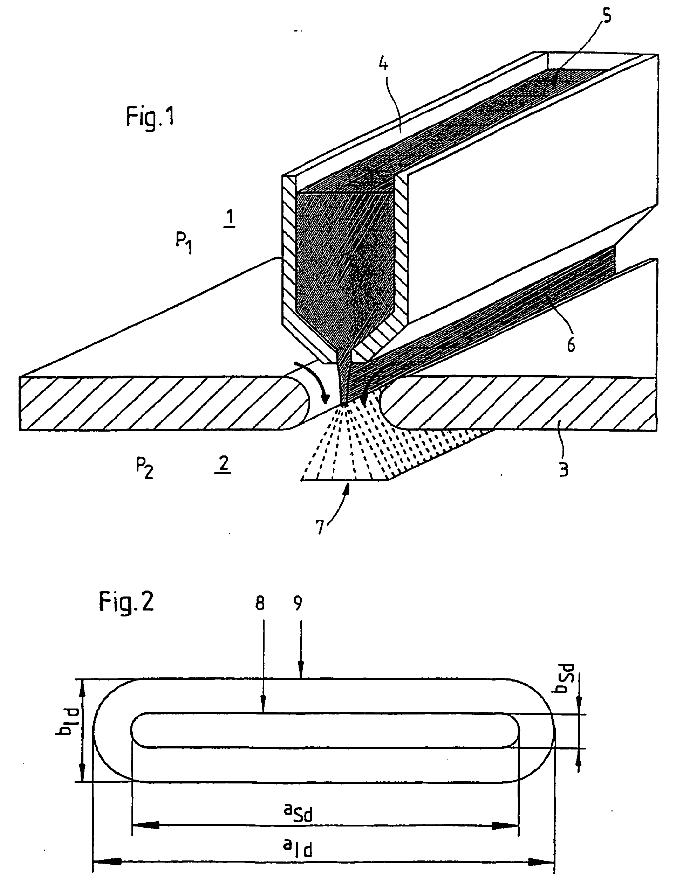

Aus der DE 33 11 343 A1 sind ein Verfahren zur Herstellung von feinen Metallpulvern sowie eine Vorrichtung zur Durchführung des Verfahrens bekannt, weiche die Verwendung von laminaren Gasströmungen in einer konzentrischen Laval-Düse mit vorgewärmtem Verdüsungsgas vorschlagen. Die Schmelzedüse ist so positioniert, dass sie sich im konvergenten Teil der Laval-Düse befindet, d.h., dass die Schmelzedüse in die Laval-Düse hineinragt. Die Strömung im Oberteil der Laval-Düse ist laminar. Im Vergleich zu Verfahren mit turbulenten Gasströmungen ergeben sich feinere Pulver mit engerer Korngrößenverteilung bei vergleichsweise geringem spezifischem Gasverbrauch, wie beispielsweise in Fig. 2 der Veröffentlichung von G. Schulz, "Laminar sonic and supersonic gas flow atomization", PM²TEC '96, World Congress on Powder Metallurgy and Particulate Materials, USA, 1996, Seite 1 bis 12, dargestellt ist. Der spezifische Gasverbrauch für die Herstellung eines Stahlpulvers mit einem mittleren Korndurchmesser von 10 µm liegt bei etwa 7 bis 8 Nm³ Ar/kg entsprechend ca. 12,5 kg bis 14,2 kg Ar/kg Stahl.

Aus der DE 35 33 964 C1 ist sind ein Verfahren und eine Vorrichtung zum Herstellen von Feinstpulvern in Kugelform bekannt, bei denen das Verdüsungsgas über einen radialsymmetrischen, beheizbaren Gastrichter in die Laval-Düse eingeführt wird, wobei das aus der innerhalb dieses Gastrichters plazierten Schmelzedüse austretende Metall durch Wärmeübertragung durch Strahlung, welche vom beheizten Gastrichter ausgeht, überhitzt bzw. beheizt wird.

Aus der DE 37 37 130 A1 sind ebenfalls ein Verfahren und eine Vorrichtung zum Herstellen von Feinstpulvern bekannt, bei denen der durch das strömende Gas in der Laval-Düse entstehende Unterdruck dazu benutzt wird, Schmelze aus einer separaten Schmelzeinrichtung anzusaugen. Auch hierbei handelt es sich um ein radialsymmetrisches Düsensystem mit innerhalb der Laval-Düse plazierter Schmelzedüse.

Aus der Veröffentlichung von G. Schulz, "Laminar sonic and supersonic gas flow atomization - The NANO-VAL-Process", Adv. Powder Metall. & Particulate Mater. (1996), 1, S. 43 - 54, ist es weiterhin bekannt, dass es zur Herstellung feiner Metallpulver notwendig ist, den aus der radialsymmetrischen Düse austretenden Massenstrom klein zu halten, wenn feine Pulver hergestellt werden sollen. Angegeben sind hier 12 bis 30 kg/h und Düse bei Schmelzedüsendurchmessern von 1 mm oder weniger.

Allen vorbekannten Verfahren ist gemeinsam, dass diese gravierende technische und wirtschaftliche Nachteile aufweisen. So sind die bisher verwendeten konzentrischen oder auch radialsymmetrischen Düsensysteme mit Schmelzedüsendurchmessern von 1 mm oder weniger, bauartbedingt besonders anfällig gegenüber mechanischen Verstopfungen durch mitgerissene Fremdpartikel oder Gasblasen. Ferner treten aufgrund eines gegebenen ungünstigen Verhältnisses von äußerer Schmelzedüsenoberfläche zum Schmelzevolumen hohe Wärmeverluste auf, die ein unerwünschtes Einfrieren der Schmelzedüsen bewirken können und dann, wie auch die mechanischen Verstopfungen, einen Abbruch der Verdüsung und längere Stillstandzeiten zur Folge haben. Darüber hinaus sind die bisher erzielbaren Produktionsleistungen gering und die spezifischen Gasverbräuche hoch. Bei der Herstellung von feinen Pulvern bestimmen die Produktionsleistung und der spezifische Gasverbrauch ganz entscheidend die Fertigungskosten. Es besteht daher Bedarf für ein Verdüsungsverfahren, das durch geringe Gasverbräuche und hohe Produktionsleistung gekennzeichnet ist.

Aus der EP 0 444 767 A2 ist ein Verfahren und eine Vorrichtung zum Zerstäuben von Flüssigkeiten, z.B. einer Metallschmelze bekannt, bei denen die aus einer Rechteckdüse austretende Schmelze in eine Coanda-Düse gelangt, die aus zwei sich gegenüberstehenden Gehäusen mit gekrümmten Coandaflächen gebildet wird. Durch schlitzartige Öffnungen in den Gehäusen wird ein unter Druck stehendes Gas über die Coandaflächen geführt und eine weitere Gasströmung strömt zwischen Schmelzefilm und Gasströmung an den Coandaflächen, worauf die Schmelze am Schnittpunkt der zwei Gasströmungen zerstäubt wird.

Der Erfindung liegt in Anbetracht dieses Standes der Technik die Aufgabe zugrunde, ein Verfahren der eingangs genannten Art unter Meidung der beschriebenen Nachteile derart zu verbessern, dass eine kostengünstige Fertigung feiner, gasverdüster Pulver ermöglicht wird. Darüber hinaus sollen Stillstandzeiten durch Verstopfungen aufgrund unreiner Schmelze und durch Einfrierungen aufgrund von Wärmeverlusten vermieden werden. Vor allem sollen Metall-, Metalllegierungs-, Salz-, Salzgemisch- oder auch Polymerschmelzen großtechnisch kostengünstig, insbesondere aber mit einem geringen Gasverbrauch und hohem Schmelzedurchsatz fein und gleichmäßig zerstäubt werden. Darüber hinaus soll die Schmelzedüse gegen mechanische Verstopfung aufgrund unreiner Schmelzen sowie gegen Einfrieren weitestgehend stabil sein.

Die Aufgabe wird erfindungsgemäß durch die kennzeichnenden Merkmale des Verfahrensanspruchs 1 und des Vorrichtungsanspruchs 9 in Verbindung mit den jeweiligen Oberbegriffen gelöst.

Überraschenderweise gelingt es, den aus der rechteckigen oder im Wesentlichen rechteckigen Schmelzedüse, bei der die kurzen Seiten durch Kreisbögen ersetzt sind, primär austretenden Schmelzefilm, der wegen seiner großen Oberfläche unter freiem Ausfluss instabil wäre, durch das Einbringen in die beschleunigte Gasströmung im konvergenten Teil der ebenfalls rechteckigen oder im Wesentlichen rechteckig ausgebildeten Laval-Düse zu stabilisieren. Damit wird ein äußerst günstiges Verhältnis von äußerer Schmelzedüsenoberfläche zum Schmelzevolumen erreicht, so dass Verstopfungen durch Einfrierungen ausgeschlossen sind. Ferner können einzelne Fremdpartikel in verunreinigten Schmelzen im ungünstigsten Fall nur einen geringen Teil des Querschnitts der Schmelzedüse beeinflussen, so dass der Verdüsungsvorgang auch dann nicht zum Erliegen kommt, Unterhalb des engsten Querschnitts der Laval-Düse wird der Schmelzefilm mit hohem spezifischen Impuls gleichmäßig zu einem feinen Pulver mit vorzugsweise sphärischem Habitus zerstäubt.

Durch die erfindungsgemäße Düse mit im Wesentlichen rechteckigem Querschnitt, das heißt, einem rechteckigen oder weitgehend rechteckigen Querschnitt, kann die Querschnittsfläche über eine Veränderung der Länge des Rechtecks so angepaßt werden, dass jeder beliebige Schmelzedurchsatz erreichbar ist und derart eine hohe Produktionsleistung gegeben ist.

Das Verhältnis des Drucks oberhalb der Laval-Düse und unterhalb der Laval-Düse entspricht mindestens dem kritischen Druckverhältnis des verwendeten Verdüsungsgases, so dass das Gas im engsten Querschnitt der Laval-Düse Schallgeschwindigkeit erreicht. Vorteilhafterweise ist das Druckverhältnis >2, vorzugsweise >10.

Gemäß einem vorteilhaften Vorschlag der Erfindung wird das Verdüsungsgas vorgewärmt. Gemäß einem weiteren vorteilhaften Vorschlag wird die aus der Schmelzedüse austretende Schmelze mittels Strahlung aufgeheizt. Die Vorwärmung des Verdüsungsgases und das Aufheizen der Schmelze mittels Strahlung sind aber keine notwendigen Voraussetzungen für die Durchführbarkeit des Verfahrens. Vorzugsweise wird auf eine Vorwärmung des Verdüsungsgases und ein Aufheizen der aus der Schmelzedüse austretenden Schmelze mittels Strahlung verzichtet, wodurch sich zum einen der apparative Aufwand erheblich reduziert und zum anderen Energie eingespart wird.

Gemäß einem weiteren vorteilhaften Vorschlag der Erfindung werden durch die Schmelzedüse auch verunreinigte Schmelzen verdüst. Vorteilhafterweise werden als zu verdüsende Schmelzen Metalle, Metallegierungen, Salze, Salzgemische oder schmelzbare Kunststoffe, wie Polymere, verwendet.

Gemäß einem weiteren vorteilhaften Vorschlag der Erfindung reagiert die zu verdüsende Schmelze nicht mit dem Verdüsungsgas, ist also inert gegenüber dem Gas. Wenn der zu verdüsende Stoff nicht mit dem Verdüsungsgas reagiert, also inert gegenüber dem Gas ist, bilden sich aus den Schmelzetröpfchen unter dem Einfluß der Oberflächenspannung kugelförmige Partikel aus. Gemäß einem weiteren Vorschlag der Erfindung reagiert die zu verdüsende Schmelze mit dem Verdüsungsgas ganz oder teilweise. Reagiert der zu verdüsende Stoff, also die Schmelze, ganz oder teilweise mit dem Verdüsungsgas, so bilden sich dabei Reaktionsprodukte, die die Einformung der Schmelzetröpfchen zu Kugeln behindern können, so dass sich unregelmäßig geformte Pulverteilchen bilden. Wird in den Partikelstrahl vorteilhafterweise ein Substrat in einem Abstand, bei dem die Partikel zumindest noch teilweise flüssig sind, eingebracht, so ist die direkte Herstellung eines Halbzeuges möglich, sogenannte Sprühkompaktierung.

Verfahrensgemäß ist das Verhältnis der Querschnittsflächen von Schmelzdüsenaustritt zum engsten Querschnitt der Laval-Düse bei linearen Systemen immer größer als bei radialsymmetrischen Düsen. Da die Durchflussmengen von Gas und Metall und dergleichen bei sonst gleichen Bedingungen proportional zur entsprechenden Düsenquerschnittsfläche sind, ergeben sich verfahrensgemäß lineare Systeme geringere spezifische Gasverbräuche. Mit der Länge des Düsensystems nimmt die Einsparung dabei zu. Durch die Proportionalität von Schmelzedüsenquerschnittsfläche und Schmelzedurchsatz läßt sich durch Anpassung der Düsenlänge jede gewünschte Produktionsleistung auf einfache Weise einstellen. Die charakteristischen Eigenschaften des Metallpulvers, wie Korngröße, Breite der Korngrößenverteilung und Kornform, bleiben dabei unverändert, wohingegen verfahrensgemäß der spezifische Gasverbrauch sinkt.

Gemäß einem weiteren besonders vorteilhaften Vorschlag der Erfindung ist das Verhältnis der langen Rechteckseite und der kurzen Rechteckseite des Austrittsquerschnitts der Schmelze- und/oder der Laval-Düse mindestens >1, bevorzugt >2, besonders bevorzugt >10. Gemäß einem weiteren vorteilhaften Vorschlag der Erfindung ist die Länge der linearen Laval-Düse im engsten Querschnitt größer als die Länge der Schmelzedüse. Vorteilhafterweise ist das Verhältnis der Breite der Laval-Düse zur Breite der Schmelzedüse >1 und <100, bevorzugt <10.

Gemäß einem weiteren besonders vorteilhaften Vorschlag der Erfindung wird der Schmelzedurchsatz durch Verlängerung der Längsseite der Schmelzedüse und entsprechende Verlängerung der Längsseite der Laval-Düse um den gleichen Betrag auf die gewünschte Produktionsleistung angepaßt, ohne dass sich dabei die Korngröße des herzustellenden Pulvers verändert oder sich der spezifische Gasverbrauch erhöht.

Weitere Einzelheiten, Merkmale und Vorteile der vorliegenden Erfindung ergeben sich aus der nachfolgenden Beschreibung der zugehörigen Zeichnungen, in denen ein bevorzugtes Ausführungsbeispiel der Erfindung schematisch dargestellt ist. Dabei zeigen:
- Fig. 1: in einer schematischen perspektivischen Ansicht das erfindungsgemäße Verdüsungsprinzip und
- Fig. 2: eine Projektion des Austrittsquerschnitts der Schmelzedüse auf den engsten Querschnitt der Laval-Düse.

Fig. 1 zeigt in einer schematisch perspektivischen Ansicht das verfahrens- und vorrichtungsgemäße Verdüsungsprinzip. Ein Gasraum 1 mit einem hohen Druck p₁ ist von einem Gasraum 2 mit niedrigem Druck p₂ durch eine zunächst konvergierende und dann divergierende Gasdüse 3 mit im Wesentlichen rechteckigem Querschnitt in Form einer linearen Laval-Düse getrennt. Das Druckverhältnis p₁/p₂ oberhalb der Laval-Düse und unterhalb der Laval-Düse entspricht dabei mindestens dem kritischen Druckverhältnis des verwendeten Verdüsungsgases, so dass das Gas im engsten Querschnitt der Laval-Düse 3 Schallgeschwindigkeit erreicht. Je höher der Verdüsungsgasdruck p₁ ist, desto feiner ist das erzeugte Pulver. Aus der filmbildenden Schmelzedüse 4 mit im Wesentlichen rechteckigem Austrittsquerschnitt fließt die Schmelze 5 filmartig aus. Die Schmelzedüse 4 ist dabei als Gießverteiler oder Schmelztiegel ausgebildet. Die Schmelze 5 des zu zerstäubenden Materials wird über bekannte Verfahrenstechniken erzeugt und bereitgestellt. Der Austritt der Schmelzedüse 4 ist oberhalb der Laval-Düse 3 positioniert und parallel zu dieser ausgerichtet. Infolge der Druckdifferenz strömt das Verdüsungsgas vom Gasraum 1 in den Gasraum 2. Im konvergenten Teil der Laval-Düse 3 wird das Gas in laminarer Strömung bis auf Schallgeschwindigkeit im engsten Querschnitt beschleunigt. Das Gas strömt immer mit höherer Geschwindigkeit als die Schmelze 5 und stabilisiert, verstreckt und beschleunigt den Schmelzefilm 6. Unterhalb des engsten Querschnitts der Laval-Düse 3 wird der dünne Schmelzefilm 6 schließlich mit hohem spezifischen Impuls über seine gesamte Länge gleichmäßig zu einem feinen Partikelstrahl 7 aus Schmelzetröpfchen zerstäubt, die dann ihre Wärme abgeben und zu einem feinen Pulver erstarren. Der stabile dünne Schmelzefilm 6 ist die Voraussetzung für die Erzeugung besonders feiner Pulver mit einem mittleren Korndurchmesser d₅₀ von etwa 10 µm.

Fig. 2 zeigt eine Projektion der Austrittsfläche 8 der Schmelzedüse 4 auf den engsten Querschnitt 9 der Laval-Düse 3. Der Austrittsquerschnitt 8 der Schmelzedüse 4 und der engste Querschnitt 9 der Lavaldüse 3 weisen an den beiden kurzen Seiten b_{sd}, b_{ld} Kreisbögen mit einem Durchmesser entsprechend der Länge der kurzen Seiten b_{sd}, b_{ld} auf, so dass jeweils ein weitgehend rechteckiger Querschnitt gegeben ist. Das in Fig. 2 nicht maßstabsgetreu wiedergegebene Verhältnis der langen Rechteckseiten a_{sd}, a_{ld}, des Austrittsquerschnitts 8 der Schmelzedüse 4 und des engsten Querschnitts 9 der Laval-Düse 3, und der kurzen Rechteckseiten b_{sd}, b_{ld}, des Austrittsquerschnitts 8 der Schmelzedüse 4 und des engsten Querschnitts 9 der Laval-Düse 3 ist dabei >10. Die Länge a_{ld} des engsten Querschnitts 9 der Laval-Düse 3 ist dabei größer als die Länge a_{sd} im Austrittsquerschnitt 8 der Schmelzedüse 4. Das Verhältnis b_{ld}/b_{sd} der Breite b_{ld} der Laval-Düse 3 zur Breite b_{sd} der Schmelzedüse 4 ist hier >1 und <10.

In den nachfolgenden Beispielen wird die verfahrensgemäße Herstellung feiner Pulver durch Zerstäubung von Schmelzen mit Gasen beschrieben:

### Beispiel 1:

Eine Lötzinnschmelze Sn62Pb36Ag2 mit einer Temperatur von 400°C wird aus einer Graphitschmelzedüse mit einem rechteckigen Austrittsquerschnitt von 15 mm² bei einer Länge von 30 mm und einem Durchmesser von 0,5 mm ausgegeben. Die verwendete Laval-Düse weist an ihrem engsten Querschnitt eine Länge von 33 mm und eine Dicke von 3,0 mm auf. Als Verdüsungsgas wird Stickstoff mit einem Überdruck p₁ von 20 bar über Umgebungsdruck verwendet. Im Gasraum 2, dem sogenannten Sprühturm, befindet sich ebenfalls Stickstoff mit einem Überdruck P₂ von 0,1 bar. Die Verdüsung findet bei einem Schmelzedurchsatz von 143 g/s entsprechend 8,6 kg/min = 516 kg/h bei einem spezifischen Gasverbrauch von 2,8 kg Stickstoff (N₂) pro kg Metall statt. Der erzielte mittlere Korndurchmesser des hergestellten Pulvers beträgt 9 µm.

### Beispiel 2:

Eine Stahlschmelze der Legierung 42 Cr Mo 4, Werkstoffnummer 1.7225, wird mit einer Temperatur von 1750°C aus einer Zirkondioxidschmelzedüse mit einer weitgehend rechteckigen Austrittsöffnung von 35 mm², einer Länge von 50 mm und einem Durchmesser von 0,7 mm ausgegeben. Die Laval-Düse weist an ihrem engsten Querschnitt eine Länge von 55 mm und eine Dicke von 3,5 mm auf. Als Verdüsungsgas wird Agon mit einem Überdruck p₁ von 30 bar über Umgebungsdruck verwendet. Im Sprühturm 2 befindet sich ebenfalls Stickstoff mit einem Überdruck P₂ von 0,1 bar. Die Verdüsung erfolgt bei einem Schmelzedurchsatz von 333 g/s entsprechend 20 kg/min, entsprechend 1200 kg/h bei einem spezifischen Gasverbrauch von 4,5 kg Agon (Ar) pro kg Metall. Es wird ein mittlerer Korndurchmesser des herzustellenden Pulvers von 9,5 µm erzielt.

### Beispiel 3:

Eine Silberschmelze mit einer Temperatur von 1060°C wird aus einer Graphitschmelzedüse mit einem weitgehend rechteckigen Austrittsquerschnitt von 20 mm² bei einer Länge von 20 mm und einem Durchmesser von 1,0 mm ausgegeben. Die Laval-Düse weist an ihrem engsten Querschnitt eine Länge von 24 mm und eine Dicke von 4,0 mm auf. Als Verdüsungsgas wird Stickstoff (N₂) mit einem Überdruck p₁ von 18 bar über Umgebungsdruck verwendet. Im Sprühturm 2 befindet sich ebenfalls Stickstoff (N₂) mit einem Überdruck p₂ von 0,1 bar. Die Verdüsung erfolgt bei einem Schmelzedurchsatz von 233 g/s entsprechend 14 kg/min, entsprechend 840 kg/h bei einem spezifischen Gasverbrauch von 1,67 kg Stickstoff (N₂) pro kg Metall. Es wird ein mittlerer Korndurchmesser von 9,0 µm erzielt.

### Beispiel 4:

Eine Aluminiumschmelze mit einer Temperatur von 800°C wird aus einer Tonerdeschmelzedüse (Al₂O₃) mit einem weitgehend rechteckigen Austrittsquerschnitt von 120 mm² bei einer Länge von 200 mm und einem Durchmesser von 0,6 mm ausgegeben. Die Laval-Düse weist an ihrem engsten Querschnitt eine Länge von 205 mm und eine Dicke von 3,0 mm auf. Als Verdüsungsgas wird ein Gemisch aus Stickstoff und Sauerstoff mit einem Sauerstoffgehalt von 1% mit einem Überdruck p₁ von 30 bar über Umgebungsdruck verwendet. Im Sprühturm 2 befindet sich ebenfalls das Stickstoff-/Sauerstoffgemisch mit einem Überdruck p₂ von 0,2 bar, wobei geringe Anteile des Sauerstoffs mit Aluminiumpartikeln oberflächlich reagierten und eine dünne stabile Oxidschicht ausbilden. Die Verdüsung erfolgt bei einem Schmelzedurchsatz von 785 g/s entsprechend 74,1 kg/min, entsprechend 2826 kg/h bei einem spezifischen Gasverbrauch von 5,9 kg Stickstoff (N₂) pro kg Metall. Es wird ein mittlerer Korndurchmesser von 10,1 µm erzielt.

### Beispiel 5:

Eine Kaliumchloridschmelze mit einer Temperatur von 820°C wird aus einer Graphitschmelzedüse mit einem weitgehend rechteckigen Austrittsquerschnitt von 30 mm² bei einer Länge von 30 mm und einem Durchmesser von 1,0 mm ausgegeben. Die Laval-Düse weist an ihrem engsten Querschnitt eine Länge von 33 mm und eine Dicke von 3,5 mm auf. Als Verdüsungsgas wird Luft mit einem Überdruck p₁ von 20 bar über Umgebungsdruck verwendet. Im Sprühturm 2 befindet sich ebenfalls Luft mit einem Überdruck p₂ von 0,1 bar. Die Verdüsung erfolgt bei einem Schmelzedurchsatz von 220 g/s entsprechend 13,2 kg/min, entsprechend 792 kg/h mit einem spezifischen Gasverbrauch von 22,1 kg Luft pro kg Salz. Es wird ein mittlerer Korndurchmesser von 8,5 µm erzielt.

### Beispiel 6:

Eine Polyethylenschmelze (LDPE) wird mit einer Temperatur von 175°C aus einer Edelstahlschmelzedüse mit einem rechteckigen Austrittsquerschnitt von 15 mm² bei einer Länge von 30 mm und einem Durchmesser von 0,5 mm ausgegeben. Die Laval-Düse weist an ihrem engsten Querschnitt eine Länge von 33 mm und eine Dicke von 3,0 mm auf. Als Verdüsungsgas wird Stickstoff (N₂) mit einem Überdruck p₁ von 10 bar über Umgebungsdruck verwendet. Im Sprühturm 2 befindet sich ebenfalls Stickstoff (N₂) mit einem Überdruck p₂ von 0,1 bar. Die Verdüsung erfolgt mit einem Schmelzedurchsatz von 20 g/s entsprechend 1,2 kg/min, entsprechend 72 kg/h mit einem spezifischen Gasverbrauch von 0,1 kg Stickstoff (N₂) pro kg Polymer. Es wird ein mittlerer Korndurchmesser von 20 µm erzielt.

### Bezugszeichenliste

- 1: Gasraum mit Druck p₁
- 2: Gasraum mit Druck p₂
- 3: Laval-Düse
- 4: Schmelzedüse
- 5: Schmelze
- 6: Schmelzefilm
- 7: Partikelstrahl

- p₁: Druck oberhalb der Laval-Düse
- p₂: Druck unterhalb der Laval-Düse
- a_{sd}: Länge der Schmelzedüse
- b_{sd}: Breite der Schmelzedüse
- a_{ld}: Länge der Laval-Düse
- b_{ld}: Breite der Laval-Düse

## Patentansprüche

1. Verfahren zur Herstellung feiner Pulver mit vorzugsweise sphärischem Habitus durch Zerstäubung von Schmelzen mit Gasen, bei dem die Schmelze (5) in Form eines Films (6) aus einer Schmelzedüse (4) mit rechteckigem Austrittsquerschnitt oder mit weitgehend rechteckigem Querschnitt, bei dem die kurzen Seiten des Rechtecks durch Kreisbögen ersetzt sind, ausfließt und anschließend gemeinsam mit einem Verdüsungsgas durch eine zunächst konvergierende und dann divergierende lineare Gasdüse (3) tritt, wobei die Gasdüse als Laval-Düse (3) mit rechteckigem Querschnitt oder mit weitgehend rechteckigem Querschnitt, bei dem die kurzen Seiten des Rechtecks durch Kreisbögen ersetzt sind, von einer laminaren beschleunigten Gasströmung durchströmt wird, die im konvergenten Teil der Laval-Düse (3) den Schmelzefilm (6) stabilisiert und gleichzeitig verstreckt, bis nach Passieren des engsten Querschnitts (9) der Schmelzefilm (6) gleichmäßig über eine gesamte Länge zerstäubt wird, wobei
das Verhältnis (p₁/p₂) des Drucks (p₁) oberhalb der Laval-Düse (3) zu dem Druck (p₂) unterhalb der Laval-Düse (3) zumindest auf das kritische Druckverhältnis des verwendeten Verdüsungsgases eingestellt wird derart, dass das Verdüsungsgas im engsten Querschnitt (9) der Laval-Düse (3) Schallgeschwindigkeit erreicht.

2. Verfahren nach Anspruch 1, **dadurch gekennzeichnet, dass** das Druckverhältnis (p₁/p₂) auf Werte >2, vorzugsweise >10, eingestellt wird.

3. Verfahren nach einem der Ansprüche 1 bis 2, **dadurch gekennzeichnet, dass** das Verdüsungsgas vorgewärmt wird.

4. Verfahren nach einem der Ansprüche 1 bis 3, **dadurch gekennzeichnet, dass** die aus der Schmelzedüse (4) austretende Schmelze (5) mittels Strahlung aufgeheizt wird.

5. Verfahren nach einem der Ansprüche 1 bis 4, **dadurch gekennzeichnet, dass** durch die Schmelzedüse (4) auch verunreinigte Schmelzen (5) verdüst werden.

6. Verfahren nach einem der Ansprüche 1 bis 5, **dadurch gekennzeichnet, dass** als zu verdüsende Schmelze (5) ein Metall, eine Metall-Legierung, ein Salz, ein Salzgemisch oder ein schmelzbarer Kunststoff verwendet wird.

7. Verfahren nach einem der Ansprüche 1 bis 6, **dadurch gekennzeichnet, dass** ein Verdüsungsgas verwendet wird, mit dem die zu verdüsende Schmelze (5) nicht reagiert, also inert gegenüber dem Verdüsungsgas ist.

8. Verfahren nach einem der Ansprüche 1 bis 6, **dadurch gekennzeichnet, dass** ein Verdüsungsgas verwendet wird, mit dem die zu verdüsende Schmelze ganz oder teilweise reagiert.

9. Düsenanordnung zur Zerstäubung von Schmelzen mit Gasen für die Durchführung des Verfahrens gemäß einem der Ansprüche 1 bis 8, mit einer Schmelzedüse (4) mit rechteckigem Austrittsquerschnitt oder mit weitgehend rechteckigem Querschnitt, bei dem die kurzen Seiten des Rechtecks durch Kreisbögen ersetzt sind und einer in Strömungsrichtung unter deren Austritt angeordneten linearen Gasdüse (3), wobei die als lineare Laval-Düse mit rechteckigem Querschnitt oder mit weitgehend rechteckigem Querschnitt, bei dem die kurzen Seiten des Rechtecks durch Kreisbögen ersetzt sind, ausgebildete Gasdüse (3) zur Erzeugung einer zunächst konvergierenden laminaren beschleunigten Gasströmung zwischen einem ersten Gasraum (1) und einem zweiten Gasraum (2) angeordnet ist, wobei der erste Gasraum (1) einen Druck (p₁) und der zweite Gasraum (2) einen Druck (p₂) aufweist und das Verhältnis der Drücke zur Erzeugung der Gasströmung mit Schallgeschwindigkeit im engsten Querschnitt der linearen Laval-Düse mindestens das kritische Druckverhältnis des verwendeten Düsengases ist, derart, dass die Gasströmung im konvergenten Teil der Gasdüse (3) den Schmelzefilm stabilisiert und gleichzeitig verstreckt, bis nach Passieren des engsten Querschnitts im divergierenden Teil der Gasdüse der Schmelzefilm gleichmäßig über seine gesamte Länge zerstäubt wird.

10. Düsenanordnung nach Anspruch 9, **dadurch gekennzeichnet, dass** das Verhältnis (a_{sd}/b_{sd}, a_{ld}/b_{ld}) der langen Rechteckseite (a_{sd}, a_{ld}) und der kurzen Rechteckseite (b_{sd}, b_{ld}) des Austrittsquerschnitts (8, 9) der Schmelzedüse (4) und/oder der Laval-Düse (3) mindestens >1, bevorzugt >2, besonders bevorzugt >10 ist.

11. Düsenanordnung nach Anspruch 9 oder 10, **dadurch gekennzeichnet, dass** die Länge (a_{ld}) der linearen Laval-Düse (3) im engsten Querschnitt (9) größer als die Länge (a_{sd}) der Schmelzedüse (4) ist.

12. Düsenarnordnung nach einem der Ansprüche 9 bis 11, **dadurch gekennzeichnet, dass** das Verhältnis (b_{ld}/b_{sd}) der Breite (b_{ld}) der Laval-Düse (3) zur Breite (b_{sd}) der Schmelzedüse (4) >1 und <100, bevorzugt <10 ist (1<b_{ld}/b_{sd}<100, bevorzugt <10).

13. Düsenanordnung nach einem der Ansprüche 9 bis 12, **dadurch gekennzeichnet, dass** der Schmelzedurchsatz durch Verlängerung der Längsseite (a_{sd}) der Schmelzedüse (4) und entsprechende Verlängerung der Längsseite (a_{ld}) der Laval-Düse (3) um den gleichen Betrag auf die gewünschte Produktionsleistung angepasst ist, ohne dass sich die Korngröße des Pulvers verändert oder sich der spezifische Gasverbrauch erhöht.

## Claims

1. Method of producing fine powder, preferably having a spherical physical appearance, by atomizing molten material with gases,
wherein the molten material (5), in the form of a film (6), flows out of a molten material nozzle (4) having a rectangular discharge cross-sectional area, or an essentially rectangular cross-sectional area, the two short sides of the rectangle being replaced by circular arcs and subsequently, together with an atomizing gas, passing through an initially converging and then diverging linear gas nozzle (3) wherein the gas nozzle is in the form of a Laval nozzle (3), having a rectangular cross-sectional area or an essentially rectangular cross-sectional area, the two short sides of the rectangle being replaced by circular arcs, and through which a laminar and accelerated gas is passing, which stabilizes and simultaneously draws the film (6) of molten material in the converging portion of the Laval nozzle (3) until the film (6) of molten material, after passing the narrowest cross-sectional area (9), is uniformly atomized over its entire length, whereby the ratio (p₁/p₂) of the pressure (p₁) above the Laval nozzle (3) to the pressure (p₂) below the Laval nozzle (3) is set at least to the critical pressure ratio of the atomizing gas that is utilized, in such a way that the atomizing gas reaches the speed of sound in the narrowest cross-sectional area (9) of the Laval nozzle (3).

2. Method according to claim 1, **characterized in that** the pressure ratio (p₁/p₂) is set to values >2, preferably >10.

3. Method according to one of claims 1 to 2, **characterized in that** the molten material (5) issuing from the molten material nozzle (4) is heated up via radiation.

4. Method according to one of claims 1 to 3, **characterized in that** the molten material (5) issuing from the molten material nozzle (4) is heated up via radiation.

5. Method according to one of claims 1 to 4, **characterized in that** contaminated or impure molten material (5) is also atomized by the molten material nozzle(4).

6. Method according to one of claims 1 to 5, **characterized in that** a metal, a metal alloy, a salt, a salt mixture or a synthetic material that can be melted is used as molten material (5) that is to be atomized.

7. Method according to one of claims 1 to 6, **characterized in that** an atomizing gas is used with which the molten material (5) that is to be atomized does not react, in other words, is inert relative to the atomizing gas.

8. Method according to one of claims 1 to 6, **characterized in that** an atomizing gas is used with which the molten material that is to be atomized reacts entirely or partially.

9. Nozzle arrangement for atomizing molten material with gases for carrying out the method of one of the claim 1 to 8, including a molten material nozzle (4) having a rectangular discharge cross-sectional area or an essentially rectangular cross-sectional area, the two short sides of the rectangle being replaced by circular arcs, and a linear gas nozzle (3) disposed below the discharge thereof in the direction of flow, wherein the gas nozzle (3) is in the form of a linear Laval nozzle having a rectangular cross-sectional area or an essentially rectangular cross-sectional area, the two short sides of the rectangle being replaced by circular arcs for producing an initially converging, laminar accelerated gas flow and being disposed between a first gas space (1) and a second gas space (2), the first gas space (1) having a pressure (p₁) and the second gas space (2) having a pressure (p₂) and the ratio of the pressures for producing the gas flow reaching the speed of sound in the narrowest cross sectional area of the linear Laval nozzle, is a least the critical pressure ratio of the atomizing gas that is utilized in such a way that the gas flow in the converging portion of the gas nozzle (3) stabilizes and simultaneously draws the film of molten material until the film of molten material, after passing the narrowest cross-sectional area in the diverging portion of the gas nozzle is uniformly atomized over its entire length.

10. Nozzle arrangement according to claim 9, **characterized in that** the ratio (a_{sd}/b_{sd}, a_{ld}/b_{ld}) of the long rectangular sides (a_{sd}, a_{ld}) and the short rectangular sides (b_{sd}, b_{ld}) of the discharge cross-sectional area (8, 9) for the molten material nozzle (4) an/or of the Laval nozzle (3) is at least >1, preferably, and especially preferably >10.

11. Nozzle arrangement according to claim 9 or 10, **characterized in that** the length (a_{ld}) of the linear Laval nozzle (3) in the narrowest cross-sectional area (9) is greater than the length (a_{sd}) of the molten material nozzle (4).

12. Nozzle arrangement according to one of the claims 9 to 11, **characterized in that** the ratio (b_{ld}, b_{sd}) of the width (b_{ld}) of the Laval nozzle (3) to the width (b_{sd}) of the molten material nozzle (4) is >1 and <100 preferably <10 (1<b_{ld}, b_{sd}<100 preferably <10).

13. Nozzle arrangement according to one of the claims 9 to 12, **characterized in that** the molten material throughout is adapted to the desired production capacity by lengthening the long side (a_{sd}) of the molten material nozzle (4) and correspondingly lengthening the long side (a_{ld}) of the Laval nozzle (3) by the same amount, without altering the granular size of the powder of increasing specific gas consumption.

## Revendications

1. Procédé pour la fabrication de poudres fines avec un habitus de préférence sphérique par atomisation de masses fondues avec des gaz, dans lequel la masse fondue (5) s'écoule, sous la forme d'un film (6), d'une buse à masse fondue (4) dotée d'une section transversale de sortie rectangulaire ou d'une section transversale largement rectangulaire, dans laquelle les côtés courts du rectangle sont remplacés par des arcs de cercle, et passe ensuite, conjointement avec un gaz d'atomisation, à travers une buse à gaz linéaire (3) d'abord convergente, puis divergente, ladite buse à gaz, qui se présente sous la forme d'une tuyère de Laval (3) avec une section transversale rectangulaire ou largement rectangulaire, où les côtés courts du rectangle sont remplacés par des arcs de cercle, est parcourue par un écoulement gazeux laminaire accéléré qui stabilise et étire en même temps, dans la partie convergente de la tuyère de Laval (3), le film de matière fondue (6) jusqu'à ce que le film de matière fondue (6), après passage de la section transversale la plus étroite (9), soit atomisé uniformément sur toute une longueur, où
le rapport (p1/p2) de la pression (p₁) au-dessus de la tuyère de Laval (3) à la pression (p₂) au-dessous de la tuyère de Laval (3) est réglé au moins au rapport critique de pressions du gaz d'atomisation utilisé, de sorte que le gaz d'atomisation atteigne, dans la section transversale la plus étroite (9) de la tuyère de Laval (3), la vitesse du son.

2. Procédé selon la revendication 1, **caractérisé en ce que** le rapport des pressions (p1/p2) est réglé sur des valeurs >2, de préférence >10.

3. Procédé selon l'une quelconque des revendications 1 à 2, **caractérisé en ce que** le gaz d'atomisation est préchauffé.

4. Procédé selon l'une quelconque des revendications 1 à 3, **caractérisé en ce que** les masses fondues (5) sortant de la buse (4) sont chauffées par rayonnement.

5. Procédé selon l'une quelconque des revendications 1 à 4, **caractérisé en ce que** même les masses fondues impures (5) sont atomisées par la buse à masse fondue (4).

6. Procédé selon l'une quelconque des revendications 1 à 5, **caractérisé en ce qu'**on utilise comme masses fondues à atomiser (5) un métal, un alliage métallique, un sel, un mélange de sels ou une matière plastique fusible.

7. Procédé selon l'une quelconque des revendications 1 à 6, **caractérisé en ce que** l'on utilise un gaz d'atomisation, avec lequel la masse fondue à atomiser (5) ne réagit pas, c'est-à-dire qui soit inerte par rapport au gaz d'atomisation.

8. Procédé selon l'une quelconque des revendications 1 à 6, **caractérisé en ce qu'**on utilise un gaz d'atomisation, avec lequel la masse fondue à atomiser (5) réagit complètement ou partiellement.

9. Dispositif de buse pour atomisation de masses fondues avec des gaz pour la réalisation du procédé selon l'une quelconque des revendications 1 à 8, avec une buse à masse fondue (4) dotée d'une section transversale rectangulaire ou d'une section transversale largement rectangulaire, dans laquelle les côtés courts du rectangle sont remplacés par des arcs de cercle, et une buse à gaz linéaire (3) disposée en dessous de sa sortie dans le sens de l'écoulement, dispositif dans lequel la buse à gaz, qui se présente sous la forme d'une tuyère de Laval linéaire avec une section transversale rectangulaire ou une section transversale largement rectangulaire, dans laquelle les côtés courts du rectangle sont remplacés par des arcs de cercle, est aménagée pour la production d'un écoulement de gaz accéléré laminaire d'abord convergent, entre un premier espace de gaz (1) et un second espace de gaz (2), ledit premier espace de gaz (1) présentant une pression (p1) et ledit second espace de gaz (2) présentant une pression (p2), et le rapport des pressions pour la production de l'écoulement de gaz à vitesse sonique dans la section transversale la plus étroite de la tuyère de Laval linéaire est au moins égal au rapport critique des pressions du gaz de buse utilisé, de sorte que l'écoulement de gaz stabilise et étire en même temps le film de masse fondue (6), dans la partie convergente de la buse de gaz (3), jusqu'à ce que le film de masse fondue, après passage au travers de la section transversale la plus étroite dans la partie divergente de la buse à gaz, soit atomisé uniformément sur toute sa longueur.

10. Dispositif de buse selon la revendication 9, **caractérisé en ce que** le rapport (a_{sd}/b_{sd}, a_{ld}/b_{ld}) du côté long du rectangle (a_{sd}, a_{ld}) et du côté court du rectangle (b_{sd}, b_{ld}) de la section transversale de sortie (8, 9) de la buse à masse fondue (4) et/ou de la tuyère de Laval (3) est au moins >1, de préférence >2 ou mieux encore >10.

11. Dispositif de buse selon la revendication 9 ou 10, **caractérisé en ce que** la longueur (a_{ld}) de la tuyère de Laval linéaire (3) dans sa section transversale la plus étroite (9) est supérieure à la longueur (a_{sd}) de la buse à masse fondue (4).

12. Dispositif de buse selon l'une quelconque des revendications 9 à 11, **caractérisé en ce que** le rapport (b_{ld/}b_{sd}) de la largeur (b_{ld}) de la tuyère de Laval (3) à la largeur (b_{sd}) de la buse à masse fondue (4) est >1 et <100, de préférence <10 (1<b_{ld/}b_{sd}<100, de préférence <10).

13. Dispositif de buse selon l'une quelconque des revendications 9 à 12, **caractérisé en ce que** le débit de masse fondue est adapté par allongement du côté long (a_{sd}) de la buse à masse fondue (4) et par allongement correspondant du côté long (a_{ld}) de la tuyère de Laval (3), pour atteindre la même valeur de performance de production souhaitée, sans que la taille granulaire de la poudre soit changée ou que la consommation spécifique de gaz augmente.
